Europäisches Patentamt

European Patent Office

Office européen des brevets

(11) Publication number: 0 341 785
A1

## (12) EUROPEAN PATENT APPLICATION

(21) Application number: 89201154.5

(51) Int. Cl.4: G11B 7/24

(22) Date of filing: 05.05.89

(30) Priority: 11.05.88 NL 8801235

(43) Date of publication of application:
15.11.89 Bulletin 89/46

(84) Designated Contracting States:
DE FR GB NL

(71) Applicant: Philips and Du Pont Optical
Company
Buizerdlaan 2
NL-3435 SB Nieuwegein(NL)

(72) Inventor: Harper, Fred Joseph
c/o INT. OCTROOIBUREAU B.V. Prof.
Holstlaan 6
NL-5656 AA Eindhoven(NL)
Inventor: De Vries, Rense Arie
c/o INT. OCTROOIBUREAU B.V. Prof.
Holstlaan 6
NL-5656 AA Eindhoven(NL)

(74) Representative: Weening, Cornelis et al
INTERNATIONAAL OCTROOIBUREAU B.V.
Prof. Holstlaan 6
NL-5656 AA Eindhoven(NL)

(54) Optical disc having an antiresonance ring.

(57) The optical disc has a sandwich structure com-
prising two parallel single discs (1, 2) which are
located at some distance from one another, and
which are interconnected by an inner spacer ring (4)
and an outer spacer ring (5), an antiresonance ring
(20) being provided in the space (19) bounded by
the discs and the rings.

FIG. 1

Xerox Copy Centre

## Optical disc having an antiresonance ring.

The invention relates to an optical disc having a sandwich structure, comprising two parallel substrate discs which are located at some distance from one another, the substrate discs each comprising an optical structure on the sides facing one another and being interconnected by means of annular spacer elements, at least one annular spacer being provided around a centre hole present in both discs and at least one annular spacer being positioned at the outer edge of the substrate discs.

The optical structure is, in particular, an optical recording layer provided on the substrate surface for inscribing and reading information in an optical manner. By exposing the recording layer to laser light emanating from, for example, an argon laser, an HeNe laser or an AlGaAs laser, which light is pulsated in accordance with the information to be recorded, changes are brought about in the recording layer at the location of the exposed areas, which can subsequently be read by means of low-intensity laser light. Examples of recording materials are metals such as Bi, chalcogenides such as Te, Se, Ga, In, Tl, Ge, S, Sb, As and colorants in which pits or decoloured spots can be formed by means of radiation using pulsated light. Particularly in the chalcogenides also phase transitions may take place from, for example, the amorphous phase to the crystalline phase, or conversely, by exposure to laser light. These phase transitions are sometimes reversible so that the recording material in question is erasable. Other recording materials are, for example, double layers of synthetic resin having mutually different coefficients of thermal expansion, in which bulges are formed by exposure to modulated laser light, which bulges can be erased by exposure to laser light having a different wavelength.

The information bits recorded can be read by means of low-intensity laser light on the basis of amplitude differences or phase differences in the reflected light emanating from a bit and the surroundings of a bit.

Yet another erasable recording material is a magnetooptical material such as GdTbFe. In the case of magnetooptical recording the magnetization of the material is changed in the places exposed to laser light under the influence of a magnetic field. The changed direction of magnetization can be traced by means of polarized read laser light on the basis of differences in Kerr rotation between the reflected light emanating from a bit and the light emanating from the surroundings of a bit.

The optical structure usually further comprises a follower track in the form of a spiral-shaped groove which is provided in the surface of the substrate disc or in a separate synthetic resin layer provided on the surface of the substrate disc. The latter is mostly the case if substrate discs of glass are used. The follower track predominantly serves to control the write and read laser light and the positions of the information bits. The follower track is scanned optically by means of a low-intensity laser beam on the basis of phase differences in reflected light. Instead of a follower track a so-called sampled servo format can also be used. In this case the groove is substituted by spaced pairs of servobits which form reference points for controlling the laser light.

The sandwich structure of the optical disc has clear advantages over a disc having a single structure. A single disc is to be understood to mean herein an optical idsc comprising a substrate disc which is provided with an optical structure on one side. The optical disc having a sandwich structure can comprise twice as much recorded information as a single disc. Moreover, in the case of the optical disc having a sandwich structure the optical structures such as the recording layers, are arranged in a closed space bounded by the substrate discs, the inner spacer located around the centre hole and the outer annular spacer. On account of this, dust particles or other atmospheric impurities cannot reach the recording layers.

A further essential advantage of the use of a sandwich structure is obtained, in particular, if substrate discs of synthetic resin such as polymethylmethacrylate and polycarbonate are used. Synthetic resins are not watervapour resistant and they absorb moisture. If one side of the synthetic resin substrate disc is covered with a recording layer, absorbtion of moisture takes place on one side leading to warpage of the synthetic resin substrate disc. In a sandwich structure, the forces acting on one substrate disc due to moisture absorption on one side compensate similar forces acting on the other disc. In this way, warpage of the optical disc having a sandwich structure is prevented or minimized to an acceptable extent. A requirement to be met is that the two substrate discs are properly interconnected by means of the spacers.

The optical disc having a sandwich structure has the disadvantage that resonances may occur. During operation the disc is rotated at a velocity of 200-8.000 Hz by means of, in particular, a spindle motor. The vibrations of the motor are transmitted to the disc, to a larger or smaller extent, in dependence on the type and the quality of the drive mechanism and the optical recording device. If the frequencies generated by the motor and the frequency of the disc itself are not sufficiently damped in the system, the amplitude of the frequency of the disc itself is enlarged. Owing to this the system starts to oscillate, such that the disc cannot be recorded or read any more.

In accordance with European Patent Application 0.245.953 the resonances can be prevented or reduced by elastically interconnecting the substrate discs at the inner ring or outer ring, one or both spacers being constructed elastically, in particular by using an O-ring of a rubber polymer which is connected on both sides to both substrate discs by means of an adhesive layer. A connection between the substrate discs, which has such a resilience brings about damping of the vibrations.

The disadvantage of this solution is that the rigid sandwich construction is lost and hence the mechanical strength is substantially reduced. Although the resonance is suppressed, the overall position of the substrate discs relative to one another is no longer fixed. Warpage, as described above, which is very disadvantageous, is again possible. Further, the alignment of the discs relative to one another may be disrupted to a very objectionable degree by shrinkage.

It is an object of the invention to provide an optical disc having a sandwich structure, which does not have the above-mentioned disadvantages.

This object is achieved in accordance with the invention by means of an optical disc of the type described in the opening paragraph, which is characterized in that an antiresonance ring of an elastic material is provided between the annular spacer elements, which entiresonance ring is connected to the substrate discs on both sides.

Experiments have shown that in the rigid sandwich construction in which both spacers are maintained, a substantial and sufficient reduction of the resonance is neverthelessobtained by utilizing an elastic intermediate ring (anti resonance ring).

In a suitable embodiment of the optical disc in accordance with the invention, the antiresonance ring is provided outside the optical structure and near the spacer element located around the centre hole.

Preferably, the antiresonance ring is a synthetic resin annular element which is provided on both sides with an adhesive by means of which the ring is connected to both substrate discs.

In accordance with a further preferred embodiment, the annular element is made of polyterephtalate and the adhesive is a glue on the basis of acrylate.

The invention will now be explained in more detail by means of an exemplary embodiment and with reference to a drawing, in which

Fig. 1 is a cross-sectional view of an optical disc in accordance with the invention,

Fig. 2 is a graph in which the resonance characteristic of the disc in accordance with the invention is shown by plotting the acceleration factor in MAG (Y-axis) versus the frequency in Hz (X-axis), and

Fig. 3 shows the resonance characteristic of a disc in which no antiresonance ring is present.

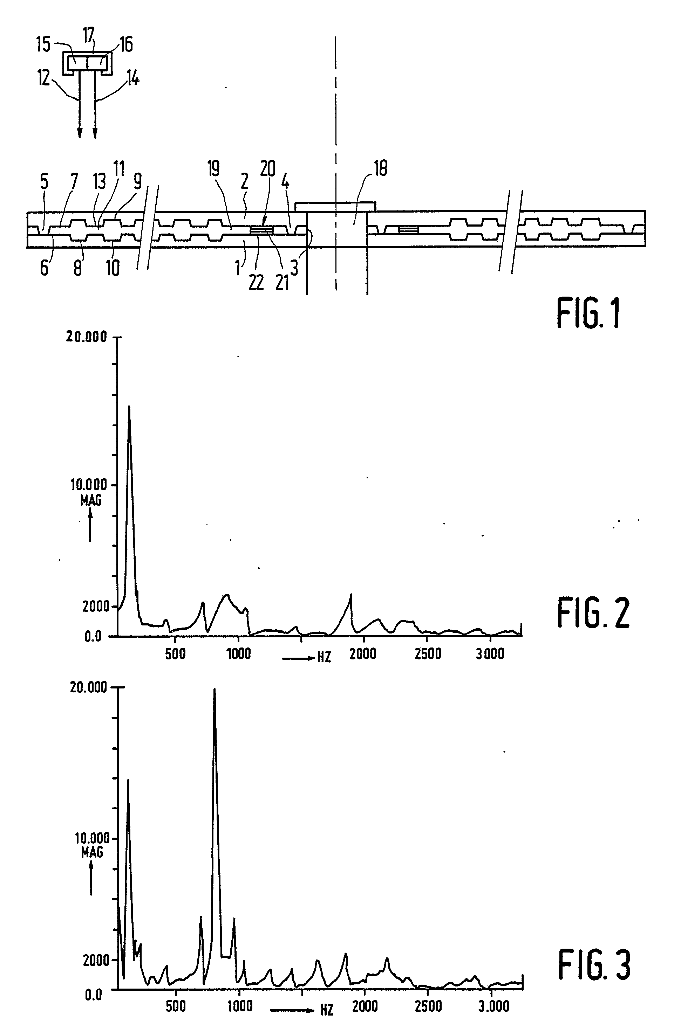

In Fig. 1, reference numerals 1 and 2 denote two parallel substrate discs of polycarbonate. Substrate disc 2 is provided with a ridge 4 around a centre hole 3. A ridge 5 is provided at the outer edge of the substrate disc 2. The substrate discs 1 and 2 are interconnected owing to the fact that the annular ridges 4 and 5, forming an inner and an outer spacer element, respectively, are fixedly connected to an adjoining inner surface 6 of substrate disc 1 by means of a welded joint obtained, for example, by means of an ultrasonic welding process. The inner surfaces 6 and 7 of substrate discs 1 and 2, respectively, are provided with a spiral-shaped groove 8, 9, respectively, which each form a follower track for the laser light used to scan the inner surfaces 6, 7, respectively. A recording layer 10, 11, respectively, of TeSeSb is provided on the inner surfaces 6 and 7. The follower track is scanned by a low-intensity continuous laser beam 12 which follows the follower track on the basis of phase differences in the laser light reflected by the follower track and the surroundings of the follower track. The surroundings are formed by, in particular, a land part 13 of the recording layer 10, which lies against the follower track. When information is recorded, a laser beam 14 which is pulsated in accordance with the information to be recorded is used. This laser beam 14 is, in this case, a separate, second laser beam which is coupled to the first scanning laser beam, for example, in that two lasers 15 and 16 are accommodated in one housing. The light spot emanating from the second beam 14 is, for example, moved relative to the first beam 12 over a distance equal to half the combined width of the follower track and the land part. On exposure to light emanating from the high-intensity second laser beam 14 a pit (information bit) not shown, is formed in the exposed places. The information areas (bits) can be read on the basis of reflection differences with the surroundings using low-intensity, continuous laser light. During scanning, recording and reading the optical disc shown in Fig. 1 is rotated at a rate of 200-3600 Hz, and the laser beams are moved across the disc diametrically. The rotation is carried out by means of a spindle motor which is not shown, a drive shaft 18 of which is coupled to the optical via the aperture 3.

The recording layers 9 and 10 are present in an enclosed space 19 which is bounded by the substrate discs 1 and 2 and the annular spacer elements 4 and 5. Owing to this, the recording layers are protected from a possible atmospheric attack and from impurities such as dust particles. This protection of the recording layers 10 and 11 has been tested in a cyclic moisture test which is also called climatic test. This test is an accelerated ageing test in which the discs are exposed to a temperature cycle with temperatures between 20 and 70° C and a moisture cycle with a relative humidity varying from 80 to 96° C for a period of 24 hours. When the test was concluded it was found that the recording layers were attacked to a negligible extent only. An anti resonance ring 20 is provided in the enclosed space 19. The ring 20 is provided outside the follower tracks 8 and 9 and contains an annular element 21 of a synthetic resin, in particular of polyterephtalate, which is provided on both sides with a layer 22 of a permanent elastic glue, in particular an acrylate glue, by means of which ring 20 is connected to substrate discs 1 and 2. In conformity with the recording layers 10 and 11, ring 20 is also protected from atmospheric attack, which has a positive effect on the quality and the life of the ring 20.

Although the substrate discs 1 and 2 are fixedly connected to one another via the rigid spacer elements 4 and 5 by means of a welded joint, the antiresonance ring 20 has nevertheless an excellent resonance-reducing effect, so that resonances in the optical disc caused by vibrations of the spindle motor and by air turbulences are suppressed. Surprisingly it has been found that a satisfactory resonance reduction already takes place at a layer thickness of the elastic adhesive layer 22 of approximately 130μUm. Owing to the resonance reduction, the variations in the position of the disc are so small that they are amply within the standard tolerances and, hence, the disc remains susitable for use.

The resonance characteristic of the disc is shown in the graph of Fig. 2, in which the frequency in Hz is plotted on the X-axis and the acceleration factor in MAG is plotted on the Y-axis. Fig. 3 shows the resonance characteristic of a disc which corresponds to the disc in accordance with the invention, with this difference that the former has no antiresonance ring. It is clear from Figs. 2 and 3, that due to the use of the antiresonance ring the large and very objectionable acceleration peak at 800-900 Hz is reduced substantially.

## Claims

1. An optical disc having a sandwich structure, comprising two parallel substrate discs which are located at some distance from one another, the substrate discs each comprising an optical structure on the sides facing one another and being interconnected by means of annular spacer elements, at least one annular spacer being provided around a centre hole present in both discs and at least one annular spacer being positioned at the outer edge of the substrate discs, characterized in that an antiresonance ring of an elastic material is provided between the annular spacer elements, which antiresonance ring is connected to the substrate discs on both sides.

2. An optical disc as claimed in Claim 1, characterized in that the antiresonance ring is provided outside the optical structure and near the spacer element located around the centre hole.

3. An optical disc as claimed in Claim 1 or 2, characterized in that the antiresonance ring comprises a synthetic resin annular element which is provided on both sides with an adhesive by means of which the antiresonance ring is connected to both substrate discs.

4. An optical disc as claimed in Claim 3, characterized in that the annular element is made of polyterephtalate and the adhesive is a glue on the basis of acrylate.

FIG.1

FIG.2

FIG.3

PHQ 88-014

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-235812 (SUMITOMO CHEMICAL CO., LTD.) * the whole document * | 1, 2 | G11B7/24 |
| A | | 3, 4 | |
| A | Proceedings of SPIE, International Society for Optical Engineering vol. 420, June 1983, Arlington, Virginia, USA page 150 - 159; Arnold T. EVENTOFF: "Improved Philips Air-Sandwich Disk" * page 150 - 151 * | 1, 3 | |
| A,D | EP-A-245953 (PLASMON DATA SYSTEMS N.V.) | | |

TECHNICAL FIELDS SEARCHED (Int. Cl.4)

G11B

The present search report has been drawn up for all claims

| Place of search | Date of completion of the search | Examiner |
|---|---|---|
| THE HAGUE | 08 AUGUST 1989 | BENFIELD A.D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)